Europäisches Patentamt

European Patent Office

Office européen des brevets

(11) Publication number: **0 000 212**
**B1**

# (12) EUROPEAN PATENT SPECIFICATION

(21) Application number: **78200020.2**

(51) Int. Cl.³: **F 16 D 9/00**

(22) Date of filing: **01.06.78**

(54) **Rotary shear pin coupling.**

(30) Priority: **21.06.77 NL 7706801**

(43) Date of publication of application:
**10.01.79 Bulletin 79/1**

(45) Publication of the grant of the European patent:.
**25.02.81 Bulletin 81/8**

(84) Designated Contracting States:
**NL**

(56) References cited:
**DE - B - 1 090 975**
**DE - B - 1 140 770**
**US - A - 3 049 898**

(73) Proprietor: **C. van der Lely N.V.**
**Weverskade 10**
**NL-3155 ZG Maasland (NL)**

(72) Inventor: **van der Lely, Cornelis**
**7. Brüschenrain**
**Zug (CH)**

(74) Representative: **Mulder, H. et al,**
**Weverskade 10**
**NL-3155 ZG Maasland (NL)**

Courier Press, Leamington Spa, England.

Rotary shear pin coupling

This invention relates to a rotary shear pin coupling comprising a first coupling member and a second coupling member which, in normal operation, are drivingly interconnected by at least one shear pin, fracture of the shear pin due to overload of the coupling permitting relative rotation of the two coupling members, one of the coupling members comprising at least one further shear pin and means to displace said further shear pin into an operative position in which it automatically re-establishes interconnection between said coupling members upon fracture of said one shear pin.

Couplings of the type specified (DE-AS 1,090,975; US 3,049,898) are particularly applicable for the transmission of torque between a power take-off shaft of a tractor and an input shaft of an agricultural implement when operation of the implement involves the danger that the implement may stall, causing· overload of the driving mechanism. The operative shear pins as well as the further shear pins of the known couplings are arranged only near the outer circumference of the coupling so that re-establishing of the interconnection between the coupling members, before furnishing a new set of shear pins, can occur only a limited number of times.

An object of the invention is to provide a coupling of the type specified which is capable of re-establishing the connection between the coupling members for a number of times which exceeds that of known coupling considerably, without the need for inserting a fresh set of shear pins.

According to the invention at least one group of adjacent shear pins is provided, the shear pins of said group being arranged in a row which is directed in a substantially radial direction with respect to the axis of rotation of the coupling, a further shear pin of said group being displaceable in a direction lateral of its length.

The provision of at least one radially directed row of shear pins enables the use of a greater part of the volume of the coupling for storage of the further shear pins. Each row can comprise a relative large amount of shear pins, due to the axial arrangement of each pin.

A known shear pin coupling of a kind that differs from the above-identified type (DE-AS 1.140.770) comprises a row of shear pins, the direction of length of these pins being arranged parallel.

For a better understanding of the present invention and to show how it may be carried into effect, reference will now be made, by way of example only, to the accompanying drawings, in which:

Figure 1 is an elevational view of a shear pin coupling;

Figure 2 is a sectional view taken on the line II—II in Figure 1;

Figure 3 is a sectional view taken on the lines III—III in Figure 2;

Figure 4 is a sectional view taken on the lines IV—IV in Figure 2;

Figure 5 is an elevational view taken in the direction of the arrow V in Figure 2;

Figure 6 is an exploded elevational view showing some component parts of the coupling of Figure 1 to 5; and

Figure 7 is an elevational view of a component part of the coupling in the direction of the arrow VII in Figure 6.

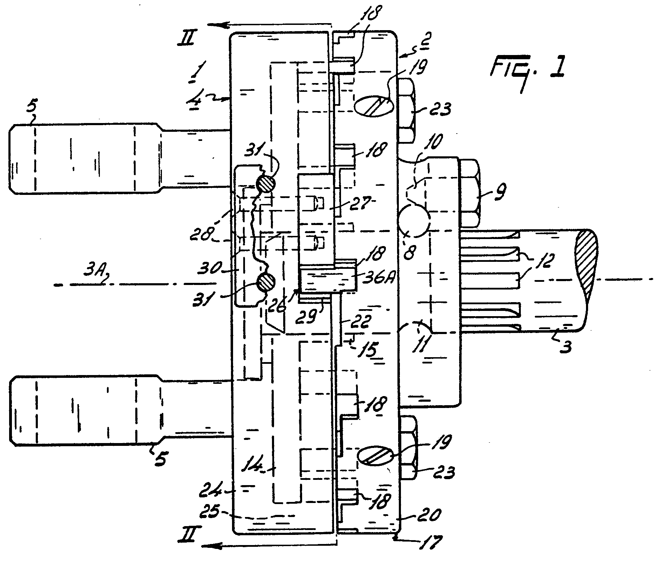

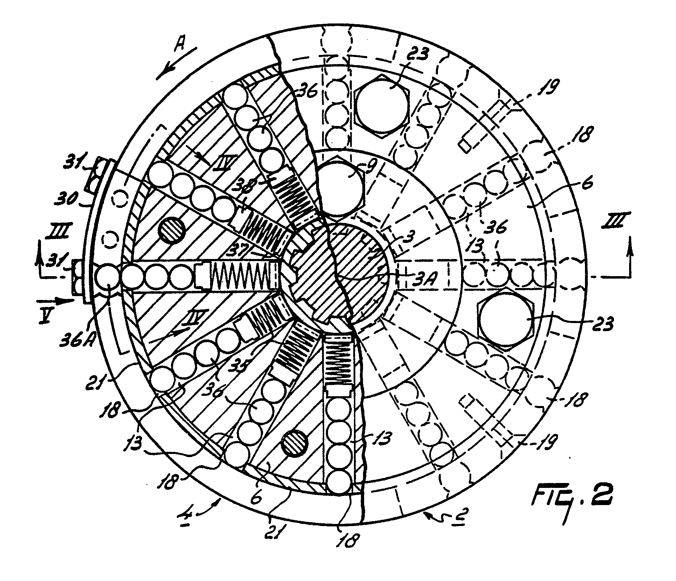

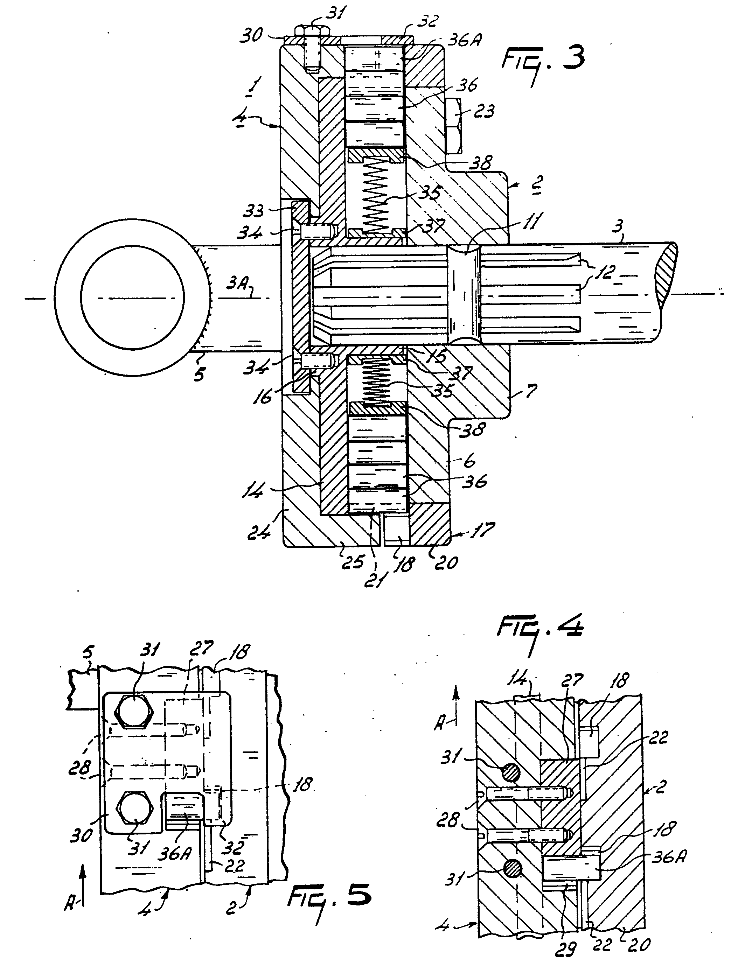

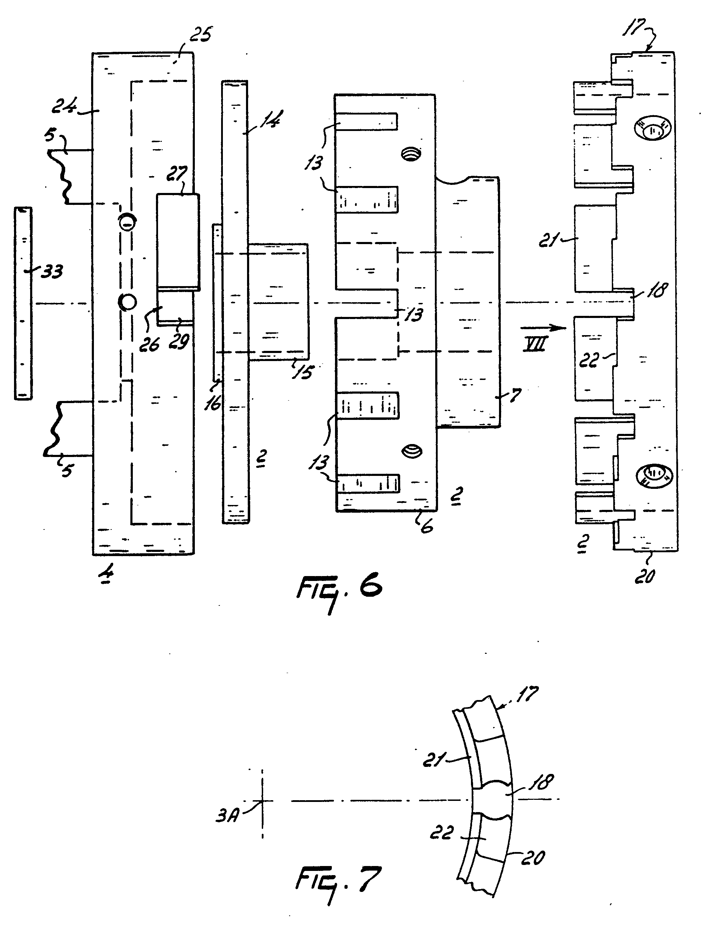

As shown in Figure 1, the shear pin coupling 1 comprises a first coupling member 2, which is mounted on a driving shaft 3, which may, for example, be the power take-off shaft of a tractor. The shear pin coupling also comprises a second coupling member 4, which has, on the side facing away from the first coupling member 2, fork prongs 5 of a universal coupling. This coupling may, for example, be one of a set of universal couplings of an auxiliary shaft (not shown), as is conventionally employed between a power take-off shaft of a tractor and an input or driven shaft of an agricultural implement. The first coupling member 2 comprises a circular flange 6 (see Figure 3) and is provided on the side facing away from the coupling member 4 with a cylindrical boss 7. The boss 7 has at least one radial bore accommodating a ball 8, which is urged radially inwardly by a set screw 9 having a conical end into a groove 11 in the driving shaft 3. In this way the coupling 2 is axially firmly connected with the driving shaft 3. The driving shaft 3 is provided with splines 12 which co-operate with corresponding splines in the first coupling member 2 to couple the driving shaft 3 and the first coupling member 2 for rotation together. On the side facing the second coupling member 4 the flange 6 has one or more (in this embodiment, twelve) guide slots 13 extending radially from near the shaft 3 to the periphery of the flange 6. Each slot 13 is substantially rectangular in tangential cross-section. The coupling member 2 also comprises a comparatively thin, circular disc 14, which has, near the shaft 3, a hub 15. The hub 15 fits coaxially within the central portion of the flange 6 (see Figure 3). The hub 15 has splines cooperating with the splines 12. The disc 14 contacts the side of the flange 6 facing the second coupling member 4. The disc 14 has, on the side facing the coupling member 4, a portion 16 of larger diameter than the hub 15. The first coupling member 2 also has a ring 17 surrounding the outer periphery of the flange 6. The ring 17 has openings or recesses 18 which are in register with the slots 13. The ring 17 is fastened to the flange 6 by means of countersunk screws 19 (see figure 2). Referring in particular to Figures 6 and 7, the ring 17 comprises a main part 20 extending up to the circumference of the coupling and a narrower part 21 terminating at a distance from the periphery, the cylindrical circumference of the narrower part 21 corresponding to that of the disc 14 (Figure 3).

Figure 7 shows that each opening 18 has arcuate radial sidewalls. These walls are located for the major part in the main portion 20. A recess 22 is provided in the main portion 20 behind each opening 18 with respect to the normal direction of operative rotation of the shear pin coupling indicated by the arrow A in Figure 2. The area of this recess perpendicular to the rotary axis 3A is located at a small distance from the neighbouring surface of the main portion 20. Viewed in the direction of rotation, the length of each recess is at least equal to, and preferably about double, the smallest tangential dimension of the opening 18. The flange 6 is connected to the disc 14 by four bolts 23.

The second coupling member 4 comprises a circular plate 24, which is provided with the fork prongs 5 and which extends radially as far as the cylindrical outer surface of the main portion 20. Near the circumference the plate 24 has a bent-over rim 25, which is also adjacent the circumference of the outer surface. The rim 25 is, on its inner side, adjacent the outer circumference of the disc 14 and extends towards the ring 17. As is shown in Figure 1, the end part of the rim 25 facing away from the prongs 5 is located a small distance away from the neighbouring side of the main portion 20. This distance is preferably about 2 mms. The rim 25 has a recess 26 receiving a cutting plate 27. The cutting plate 27 is secured to the plate 24 by countersunk screws 28. The cutting plate 27 is located in the leading part of the recess 26, as viewed in the direction of operative rotation A, and is substantially rectangular, as viewed radially (Figure 4). The side of the cutting plate 27 facing the main portion 20 engages the adjacent surface of the main portion 20 (see Figure 4). The remaining part of the recess 26 bounded by the cutting plate 27 forms an opening 29 having radially extending sidewalls, the shape of which substantially corresponds with that of the sidewalls of the opening 18. The recess 26 is covered on its radially outer side by a cover plate 30, which is connected with the rim 25 by two bolts 31. The cover plate 30 extends across the main portion 20 (see Figures 3 and 5) and, with a part 32, covers the opening 18 adjacent the opening 29 in a radial, outward direction. The opening 29 is not covered by the cover plate 30 in a radial, outward direction. The plate 24 has near its centre a bore which goes only part of the way through the thickness of the plate 24. This bore receives a retaining plate 33 which is fastened to the part 16 of the disc 14 by countersunk screws 34. In this way the second coupling member 4 is rigidly axially secured to the first coupling member 2.

As can be seen in Figures 2 and 3, each slot 13 accommodates a plurality of shear pins 36 and a compression spring 35, which tends to push the shear pins 36, which are arranged in a group comprising a radially extending row, towards the circumference of the shear pin coupling. The shear pins of each row are disposed in their slot 13 so that their centre lines lie in a common radial plane. One end part of the spring 35 is located near the hub 15 in a spring guide 37, whereas on the side remote from the hub 15 the spring 35 exerts pressure on a pressure pin 38. The spring guide 37 and the pressure pin 38 each have a rectangular cross-section to match that of the slot 13. The pins 36 in the slot 13 preferably extend axially with respect to the rotary axis 3A. Each slot 13 may contain about 3 to 6 pins; in this embodiment, they each contain 4 pins.

The shear pin coupling described above operates as follows. During operation the shear pin coupling is provided between the output shaft of a power source and the shaft of a mechanism to be driven. The shear pin coupling may be employed in many different situations, but in this embodiment it is arranged in the end portion of an auxiliary shaft having two universal couplings, in which, as stated above, the first coupling member 2 is connected with the power take-off shaft 3 of a tractor (not shown). The two coupling members 2 and 4 are interconnected for rotation together by a shear pin 36A. The part of this shear pin 36A which is disposed in the first coupling member 2 about the rear sidewall of the opening 18, as viewed in the direction of rotation A, this side wall ensuring by its concave shape a satisfactory transfer of forces from the sidewall to the adjacent part of the shear pin 36A. This part of the shear pin is retained against radially outward movement by the part 32 of the cover plate 30. The part of the shear pin 36A which is located in the second coupling member 4 lies in the opening 29 and is in contact with the leading sidewall of the opening 29, as viewed in the direction of rotation A, this sidewall comprising the side of the cutting plate 27, the surface of this side also matching the cylindrical surface of the shear pin. Preferably about one third of the length of the shear pin 36A is located in the opening 18 and the other two thirds are located in the opening 29. The openings 18 and 19 have, as viewed in a tangential direction, a larger dimension than the diameter of the shear pins 36 and 36A. This excess is preferably about 40%. The part of the shear pin located in the opening 29 is not covered by the cover plate 30. As viewed in an axial direction, the length of the openings 18 and 29 is only slightly larger than the axial length of the shear pins 36 and 36A respectively. If the coupling is overloaded, which will occur at a torque depending upon the choice of characteristics for the shear pin 36, the cutting plate produces a sharply defined fracture and prevents damage of the rim 25, whilst damage of the ring 17 can be avoided by making it from hardened material. After fracture of the shear pin 36A the coupling member 4 will come to a standstill, whilst the broken-off part of the shear pin 36A located in the opening 29 can emerge unhindered in a radial direction. The part of the shear pin remaining in the opening 18 will continue rotating with the first coupling member 2, which rotation results in relative rotation between the two coupling members 2 and 4. Thus the opening 18 moves out from beneath the cover plate 30 so that the shear pin part can be ejected from the opening 18. This ejection is facilitated by the centrifugal force exerted on the shear pin. Moreover, since the rim 25 and the main portion 20 are a small distance apart from one another, any uneven fracture between the two parts of the broken-down shear pin should not result in jamming. The recess 22 located behind the opening 18, as viewed in the direction of rotation A, further facilitates the escape of the shear pin part. After the broken parts of the shear pin have been removed from the openings 18 and 29 respectively, a next-following shear pin 36 can move out of one of the slots 13 into a position for connecting the two coupling members. However, with the conventional speed of the power take-off shaft, which is about 540 rev/min. it is not possible for the next shear pin to be urged in a radial outward direction. This is because the tangential dimension of the opening 29 is intentionally chosen so that the sum of the force of the spring 35 and the centrifugal force exerted on the row of shear pins is not sufficient, at the normal operating speed of the power take-off shaft, to give the shear pin, having a known mass, an acceleration sufficient to bridge the distance between the original position and the connecting position during the instant when the opening 29 is in register with the opening 18. It is important for the spring force to diminish proportionally to the reduced total mass of the row of shear pins as the shear pins are used up. The critical speed at which the spring is capable of displacing a new shear pin into a new connecting position is preferably chosen so that this speed is below the minimum speed of the power take-off shaft corresponding to idling of the driving engine. With a Diesel engine, for example, this critical speed at which the connection is re-established may be about 150 revolutions per minute. The movement of a shear pin into a new connecting position is limited in a radial direction by the part 32 of the cover plate 30 forming a stop. After the coupling is re-established, the shear pin coupling is again capable of transferring the driving power. In this way the construction according to the invention provides protection from overload for a long time without needing to renew shear pins after each overload. Four shear pins in each of twelve slots 13 can reestablish the driving connection after overload 48 times in succession. When all the shear pins have been used, the shear pin coupling can again be filled by removing the cover plate 30. By turning the rim 25 with respect to the main portion 20 the opening 29 can be brought into register with all of the openings 18 in succession, so that the shear pins can be inserted into the slots 13. After all the slots have been filled and the cover plate 30 is refitted, the shear pin coupling 1 is again ready for use.

## Claims

1. A rotary shear pin coupling comprising a first coupling member (2) and a second coupling member (4) which, in normal operation, are drivingly interconnected by at least one shear pin (36A), fracture of the shear pin due to overload of the coupling permitting relative rotation of the two coupling members, one of the coupling members (2) comprising at least one further shear pin (36) and means to displace said further shear pin into an operative position in which it automatically re-establishes interconnection between said coupling members upon fracture of said one shear pin (36A), characterized in that at least one group of adjacent shear pins is provided, the shear pins of said group being arranged in a row which is directed in a substantially radial direction with respect to the axis of rotation (3A) of the coupling, a further shear pin (36) of said group being displaceable in a direction lateral of its length.

2. A rotary shear pin coupling as claimed in claim 1, characterized in that the shear pins of said group are provided in a guide slot (13) which extends from near the axis of rotation (3A) of the coupling up to the outer circumference of said one coupling member (2)..

3. A rotary shear pin coupling as claimed in claim 1 or 2, characterized in that said means comprises a spring (35), one end of which faces the axis of rotation (3A) of the coupling, the other end of which urges an adjacent shear pin (36) of said group in outward direction.

4. A rotary shear pin coupling as claimed in any one of claims 1 to 3, characterized in that each group comprises at least four shear pins (36).

5. A rotary shear pin coupling as claimed in any one of claims 1 to 4, characterized in that at least two groups are provided.

6. A rotary shear pin coupling as claimed in any one of claims 2 to 5, characterized in that the guide slot (13) is provided in said one coupling member (2) and the other coupling member (4) has a radially extending opening which, in normal operation, accommodates part of the shear pin which interconnects the two coupling members, the said one coupling member (2) comprising at the circumference an annular element (17) which has a respective radially extending opening in register with the guide slot (13), said openings having at least one concave, radial side-wall matching the shape of the pin.

7. A rotary shear pin coupling as claimed in claim 6, characterized in that a recess is provided in the annular element (17) behind the opening with respect to the intended direction of operative rotation of the coupling, the recess having a circumferential dimension which is at least equal to the circumferential dimension of the opening.

8. A rotary shear pin coupling as claimed in claim 6 or 7, characterized in that a cover plate (30) is connected with said other coupling member (4) and covers, in normal operation, the opening in the annular element (17), the cover plate (30) being removable for filling the guide slot with shear pins, a cutting plate (27) being arranged in said other coupling member (4) radially inwardly of the cover plate (30), the cutting plate (27) bearing, in normal operation, on the shear pin (36A) interconnecting the two coupling members, and said cutting plate (27) projecting beyond the axial end of the second coupling member.

9. A rotary shear pin coupling as claimed in any one of the preceding claims, characterized in that the adjacent surfaces of the two coupling members (2, 4) are spaced apart from one another in the region of the circumference, the distance between the coupling members being about 2 mms.

**Patentansprüche**

1. Eine rotierende Scherstiftkupplung mit einem ersten Kupplungsteil (2) und einem zweiten Kupplungsteil (4), die im normalen Betrieb durch mindestens einen Scherstift (36A) treibend miteinander verbunden sind und ein durch Überlastung der Kupplung bedingter Bruch des Scherstiftes eine Relativrotation der beiden Kupplungsteile zueinander erlaubt und eines der Kupplungsteile (2) mindestens einen weiteren Scherstift (36) und Mittel zum Verschieben des weiteren Scherstiftes in eine Betriebsstellung, in der er automatisch die Verbindung zwischen den Kupplungsteilen nach Bruch des einen Scherstiftes (36A) wieder herstellt, aufweist, dadurch gekennzeichnet, dass mindestens eine Gruppe von benachbarten Scherstiften vorgesehen ist, dass die Scherstifte der Gruppe in einer Reihe angeordnet sind, die in bezug auf die Rotationsachse (3A) der Kupplung in einer etwa radialen Richtung liegt und ein weiterer Scherstift (36) der Gruppe in einer Richtung seitlich zu seiner Länge verschiebbar ist.

2. Eine rotierende Scherstiftkupplung nach Anspruch 1, dadurch gekennzeichnet, dass die Scherstifte der Gruppe in einer Führungsnut (13) angeordnet sind, die sich von nahe der Rotationsachse (3A) der Kupplung bis zum äusseren Umfang des besagten ersten Kupplungsteils (2) erstreckt.

3. Eine rotierende Scherstiftkupplung nach Anspruch 1 oder 2, dadurch gekennzeichnet, dass die Mittel eine Feder (35) umfassen, die mit einem Ende der Drehachse (3A) der Kupplung zugewandt ist und das andere Ende einen benachbarten Scherstift (36) der Gruppe nach aussen drückt.

4. Eine rotierende Scherstiftkupplung nach einem der vorhergehenden Ansprüche 1 bis 3, dadurch gekennzeichnet, dass jede Gruppe mindestens vier Scherstifte (36) umfasst.

5. Eine rotierende Scherstiftkupplung nach einem der Ansprüche 1 bis 4, dadurch gekennzeichnet, dass mindestens zwei Gruppen vorgesehen sind.

6. Eine rotierende Scherstiftkupplung nach einem der Ansprüche 2 bis 5, dadurch gekennzeichnet, dass die Führungsnut (13) im ersten Kupplungsteil (2) vorgesehen ist und das andere Kupplungsteil (4) eine sich radial erstreckende Öffnung hat, die im normalen Betrieb Teile des Scherstiftes aufnimmt, der die beiden Kupplungsteile miteinander verbindet, und dass der erste Kupplungsteil am Umfang ein ringförmiges Teil (17) aufweist, das eine zugehörige, radial sich erstreckende Öffnung hat, die zur Führungsnut (13) fluchtet und die besagten Öffnungen zumindest eine konkave, radiale Seitenwand haben, die der Form des Stiftes angepasst ist.

7. Eine rotierende Scherstifkupplung nach Anspruch 6, dadurch gekennzeichnet, dass in bezug auf die vorgesehene Richtung der Rotation im Betrieb der Kupplung hinter der Öffnung eine Aussparung im ringförmigen Element (17) vorgesehen ist und die Aussparung im Umfangsrichtung eine Abmessung aufweist, die gleich der Abmessung der Öffnung im Umfangsrichtung ist.

8. Eine rotierende Scherstiftkupplung nach Anspruch 6 oder 7, dadurch gekennzeichnet, dass eine Abdeckplatte (30) mit dem anderen Kupplungsteil (4) verbindung ist und im normalen Betrieb die Öffnung im ringförmigen Element (17) abdecktund dass die Abdeckplatte (30) zum Füllen der Führungsnuten mit Scherstiften entfernbar ist und dass eine Schneidplatte (27) in dem anderen Kupplungsteil (4) radial innerhalb der Abdeckplatte (30) angeordnet ist und die Schneidplatte (27) sich im normalen Betrieb auf den die beiden Kupplungsteile verbindenden Scherstift (36A) abstützt und dass die Schneidplatte (27) über das axiale Ende des zweiten Kupplungsteil herausragt.

9. Eine Scherstiftkupplung nach einem der vorhergehenden Ansprüche, dadurch gekennzeichnet, dass die einander zugewandten Stirnflächen der beiden Kupplungsteile (2, 4) im Bereich ihres Umfangs voneinander auseinander liegen und dass der Abstand zwischen den Kupplungsteilen etwa 2 mm beträgt.

**Revendications**

1. Accouplement rotatif à goupilles à cisaillement comprenant un premier organe d'accouplement (2) et un second organe d'accouplement (4) qui, pendant un fonctionnement normal, sont reliés opérationnellement par au moins une goupille à cisaillement (36A), la rupture de la goupille à cisaillement due à la surcharge de l'accouplement permettant une rotation relative des deux organes d'accouplement, l'un des organes d'accouplement (2) comprenant au moins une autre goupille à cisaillement (36) et des moyens pour amener cette autre goupille à cisaillement en position opérative dans laquelle elle rétablit automatiquement l'interconnexion entre lesdits organes d'accouplement après rupture de la goupille à cisaillement (36A), caractérisé en ce que l'accouplement comprend au moins un groupe de goupilles à cisaillement adjacentes, les goupilles à cisaillement de ce groupe étant disposées selon une rangée dirigée en direction sensiblement radiale par rapport à l'axe de rotation (3A) de l'accouplement, alors qu'une autre goupille à cisaillement (36) de ce groupe est mobile en direction latérale par rapport à sa longueur.

2. Accouplement rotatif à goupilles à cisaillement selon la revendication 1, caractérisé en ce que les goupilles à cisaillement dudit groupe sont placées dans une rainure de guidage (13) s'étendant d'une zone proche de l'axe de rotation (3A) de l'accouplement jusqu'à la circonférence externe de cet organe d'accouplement (2).

3. Accouplement rotatif à goupilles à cisaillement selon la revendication 1 ou 2, caractérisé en ce que lesdits moyens comprennent un ressort (35) dont une extrémité fait face à l'axe de rotation (3A) de l'accouplement et dont l'autre extrémité sollicite une goupille à cisaillement adjacente (36) de ce groupe en direction vers l'extérieur.

4. Accouplement rotatif à goupilles à cisaillement selon l'une quelconque des revendications 1 à 3, caractérisée en de que chaque groupe comprend au moins quatre goupilles à cisaillement (36).

5. Accouplement rotatif à goupilles à cisaillement selon l'une quelconque des revendications 1 à 4, caractérisé en ce qu'il comprend au moins deux groupes de goupilles.

6. Accouplement rotatif à goupilles à cisaillement selon l'une quelconque des revendications 2 à 5, caractérisé en ce que la rainure de guidage (13) est prévue dans d'un des organes d'accouplement (2) alors que l'autre organe d'accouplement (4) est pourvu d'une ouverture disposée radialement et qui, en fonctionnement normal, loge une partie de la goupille à cisaillement qui relie les deux organes d'accouplement, ledit organe d'accouplement (2) comprenant sur sa circonférence un élément annulaire (17) pourvu d'une ouverture respective disposée radialement et en coïncidence avec la rainure de guidage (13), ces ouvertures comprenant au moins une paroi latérale radiale concave s'adaptant à la forme de la goupille.

7. Accouplement rotatif à goupilles à cisaillement selon la revendication 6, caractérisé en ce qu'il comprend un évidement dans l'élément annulaire (17) à l'arrière de l'ouverture par rapport à la direction de rotation opérative que l'accouplement doit effectuer, l'évidement ayant une dimension circonférencielle au moins égale à la dimension circonférencielle de l'ouverture.

8. Accouplement rotatif à goupilles à cisaillement selon la revendication 6 ou 7, caractérisé en ce qu'une plaque de couverture (30) est reliée audit autre organe d'accouplement (4) et recouvre en fonctionnement normal l'ouverture de l'élément annulaire (17), la plaque de couverture (30) étant amovible en vue du remplissage de la rainue de guidage avec les goupilles à cisaillement, une plaque de coupe (27) étant disposée dans l'autre organe d'acouplement (4) radialement vers l'intérieur de la plaque de couverture (30), la plaque de coupe (27) portant en fonctionnement normal sur la goupille à cisaillement (36A) qui relie les deux organes d'accouplement, et ladite plaque de coupe (27) faisant saillie au-delà de l'extrémité radiale du second organe d'accouplement.

9. Accouplement rotatif à goupilles à cisaillement selon l'une quelconque des revendications précédentes, caractérisé en ce que les surfaces adjacentes des deux organes d'accouplement (2, 4) sont espacées l'une de l'autre dans la zone de la circonférence, la distance entre les organes d'accouplement étant d'environ 2 mm.

FIG. 1

FIG. 2

2/3

FIG. 3

FIG. 4

FIG. 5

FIG. 6

FIG. 7